(19) Europäisches Patentamt / European Patent Office / Office européen des brevets

(11) **EP 2 758 799 B1**

(12) **EUROPÄISCHE PATENTSCHRIFT**

(45) Veröffentlichungstag und Bekanntmachung des Hinweises auf die Patenterteilung:
**04.11.2015 Patentblatt 2015/45**

(21) Anmeldenummer: **12773238.6**

(22) Anmeldetag: **12.09.2012**

(51) Int Cl.:
*G01S 15/88* (2006.01)

(86) Internationale Anmeldenummer:
**PCT/EP2012/067772**

(87) Internationale Veröffentlichungsnummer:
**WO 2013/041417 (28.03.2013 Gazette 2013/13)**

(54) **VERFAHREN UND VORRICHTUNG ZUR EXTRAKTION VON KONTUREN AUS SONARBILDERN**

METHOD AND DEVICE FOR EXTRACTING CONTOURS FROM SONAR IMAGES

PROCÉDÉ ET DISPOSITIF D'EXTRACTION DE CONTOURS À PARTIR D'IMAGES SONAR

(84) Benannte Vertragsstaaten:
**AL AT BE BG CH CY CZ DE DK EE ES FI FR GB GR HR HU IE IS IT LI LT LU LV MC MK MT NL NO PL PT RO RS SE SI SK SM TR**

(30) Priorität: **23.09.2011 DE 102011114221**

(43) Veröffentlichungstag der Anmeldung:
**30.07.2014 Patentblatt 2014/31**

(73) Patentinhaber: **ATLAS ELEKTRONIK GmbH**
**28309 Bremen (DE)**

(72) Erfinder:
• **LEHMANN, Benjamin**
**28359 Bremen (DE)**
• **SIANTIDIS, Konstantinos**
**28215 Bremen (DE)**
• **KRAUS, Dieter**
**28876 Oyten (DE)**

(56) Entgegenhaltungen:
• **YE X F ET AL: "Sonar image segmentation based on GMRF and level-set models", OCEAN ENGINEERING, PERGAMON, AMSTERDAM, NL, Bd. 37, Nr. 10, 1. Juli 2010 (2010-07-01), Seiten 891-901, XP027058212, ISSN: 0029-8018 [gefunden am 2010-03-16]**

EP 2 758 799 B1

**Beschreibung**

Die Erfindung betrifft ein Verfahren und eine Vorrichtung zur Extraktion von Konturen aus Sonarbildern gemäß dem Oberbegriff von Anspruch 1 bzw. Anspruch 9.

Moderne Sonarsignalverarbeitungsanlagen wie bspw. synthetische Apertur-Sonaranlagen erzeugen Bilder vom Meeresboden von sehr hoher Qualität. In Verbindung mit autonomen Unterwasserfahrzeugen können derartige Sonaranlagen Daten für Bilder mit einer Auflösung von wenigen Zentimetern bei einer Streifenbreite von mehreren hundert Metern sammeln. Missionen mit derartigen autonomen Unterwasserfahrzeugen dauern mitunter mehrere Stunden, so dass eine erhebliche Menge an aufgezeichneten Daten anfallen. Diese Datenmenge stellt eine enorme Herausforderung an eine Bedienperson dar, welche diese Daten im Hinblick auf in den Sonarbildern zu detektierende Objekte auswerten muss. Bei derartigen Objekten kann es sich vorzugsweise um Gegenstände technischen Ursprungs handeln, wie bspw. abgerissene Schiffsanker oder über Bord gegangene Fracht, z.B. Container, oder versenkte Munition und dergleichen, welche Schifffahrtsrouten oder Tauchreviere gefährden könnten.

Um die Bedienperson zu ersetzen oder die Bedienperson zu unterstützen, werden Bildverarbeitungsmethoden herangezogen. Ein wesentlicher Schritt in der Bildverarbeitung ist die Segmentierung des Bildes in verschiedene Bereiche, insbesondere in einen Bereich mit hohen Intensitätswerten, d.h. Werten, an denen ein aktiv ausgesendetes akustisches Signal in besonderem Maße zurückgestreut wird. Derartige Bereiche unterscheiden sich signifikant vom Hintergrund, bspw. einem mit Sand bedecktem oder mit Algen bewachsenem Meeresgrund.

Zum Erkennen derartiger Bereiche schlagen Chan, Tony, F. und Vese, Luminita A., "Active Contours Without Edges", in IEEE Transactions on Image Processing, Vol. 10, Seiten 266 bis 277, 2001, vor, Konturen in besonderer Weise zu Extrahieren.

Nach Festlegung eines initialen Konturenmusters mit einer oder mehreren initialen Konturen als aktuelles Konturenmuster mit einer oder mehreren aktuellen Konturen für als Highlight bezeichnete Bereiche mit hohen Intensitätswerten wird eine aktuelle Level-Set-Funktion $\phi^n(x, y)$ basierend auf dem aktuellen Konturenmuster erzeugt. Dazu wird für jedes Pixel an der Stelle x,y der kürzeste Abstand zum Konturenmuster bestimmt und der Wert dieses Abstands als Wert der Level-Set-Funktion an der Stelle x,y herangezogen, falls das jeweilige Pixel innerhalb einer aktuellen Kontur liegt. Sofern das jeweilige Pixel außerhalb der aktuellen Kontur(en) liegt, wird der negative Wert des Abstands als Wert der Level-Set-Funktion herangezogen. Alternativ kann die Vorzeichenbestimmung des genannten Werts der Level-Set-Funktion auch umgekehrt erfolgen.

Anschließend wird eine neue Level-Set-Funktion $\phi^{n+1}(x,y)$ erzeugt mittels der Gleichung

$$\phi^{n+1}(x,y) = \phi^n(x,y) + \Delta t \cdot \left( K(x,y) - d_i(x,y) + d_o(x,y) \right),$$

wobei $\phi^n(x,y)$ die aktuelle Level-Set-Funktion, $K(x, y)$ ein die Krümmung der aktuellen Level-Set-Funktion $\phi^n(x,y)$ an der Stelle x,y repräsentierender Term, $d_i(x, y)$ ein die Differenz des Intensitätswerts des Pixels an der Stelle x,y und des Mittelwerts aller Pixel innerhalb aller aktuellen Konturen repräsentierender Term, $d_o(x,y)$ ein die Differenz des Intensitätswerts des Pixels an der Stelle x,y und des Mittelwerts aller Pixel außerhalb aller aktuellen Konturen repräsentierender Term und $\Delta t$ eine Konstante ist.

Anschließend wird ein neues Konturenmuster durch Schneiden der neuen Level-Set-Funktion $\phi^{n+1}(x,y)$ mit der x-y-Ebene erzeugt. Dazu wird die neue Level-Set-Funktion $\phi^{n+1}(x,y)=0$ gesetzt, womit sich eine oder mehrere neue Konturen in der x-y-Ebene ergeben, woraus ein neues Konturenmuster resultiert.

Sodann wird die aktuelle Level-Set-Funktion $\phi^n(x,y)$ durch die neue Level-Set-Funktion $\phi^{n+1}(x,y)$ und das aktuelle Konturenmuster durch das neue Konturenmuster ersetzt. Iterativ werden nunmehr die vorstehend genannten Schritte des Erzeugens einer neuen Level-Set-Funktion $\varphi^{n+1}(x, y)$, des Erzeugens eines neuen Konturenmusters durch Schneiden der neuen Level-Set-Funktion mit der x-y-Ebene und des Ersetzens der aktuellen Level-Set-Funktion $\varphi^n(x, y)$ durch die neue Level-Set-Funktion $\varphi^{n+1}(x, y)$ und des aktuellen Konturenmusters durch das neue Konturenmuster sooft wiederholt, bis sich die Länge des Umfangs der aktuellen Kontur bzw. aller aktuellen Konturen nicht mehr ändert oder eine Änderung nicht mehr signifikant ist, indem bspw. die Änderung der Länge unter einem vorbestimmten Maß verbleibt.

Sodann werden die aktuellen Kontur(en) als Kontur(en) eines oder mehrerer als Highlight bezeichneter Bereiche mit hohen Intensitätswerten festgelegt.

Diese Vorgehensweise eignet sich für die Bestimmung des Highlights.

Nachteilig an dieser Vorgehensweise ist jedoch, dass Schattenbereiche durch die Highlight-Extraktion unterdrückt oder gar ausgelöscht werden. Dadurch kann die Information, die in den Schatten von Objekten enthalten sind, nicht benutzt werden. Dies ist insbesondere nachteilig, wenn die Identifizierung von am Meeresgrund liegenden Objekten angestrebt wird.

In X. Ye, L. Wang, T. Wang, G. Wang, "A Level-set Model Driven by Bidimensional EMD for Sonar Image Segmentation", in Proceedings of the 201 1 IEEE ICMA, August 2011, ist ein Verfahren zur Extraktion von Konturen aus Sonarbildern mittels eines Multiphasen Level-Set Modell gezeigt. Bei Anwendung eines vierphasigen Level-Set Modells mit zwei Level-Set-Funktionen wird das zu segmentierende Bild in vier Bereiche unterteilt. Dabei beschreibt die eine Level-Set-Funktion den Highlight-Bereich und die andere Level-Set-Funktion den Schatten-Bereich. Die Schnittmenge der beiden Funktionen verschwindet im iterativen Prozess. Der vierte Bereich, der durch die Level-Set-Funktion nicht abgedeckt wird, bezeichnet das Hintergrundrauschen. Zur Lösung des Level-Set Modells wird die Verwendung einer zweidimensionalen empirischen Moden-Dekomposition (BEMD) beschrieben.

Zudem offenbart YE X F et al: "Sonar image segmentation based on GMRF and level-set models", OCEAN ENGINEERING, PERGAMON, AMSTERDAM, NL, Bd. 37, Nr. 10, 1. Juli 2010 (2010-07-07), Seiten 891-901, XP027058212, ISSN: 0029-8018 ein Verfahren mit den Merkmalen des Oberbegriffes des Anspruches 1.

Der Erfindung liegt daher das technische Problem zugrunde, zusätzliche Informationen aus Sonarbildern zu gewinnen.

Die Erfindung löst diese Aufgabe mit den Merkmalen der Ansprüche 1 und 9, d.h. mittels eines Verfahrens sowie einer Vorrichtung zur Extraktion von Konturen aus Sonarbildern mit den Merkmalen gemäß diesen Ansprüchen.

Dank der Erfindung können zusätzlich zu dem Highlight eines Sonarbildes auch ein Schatten bzw. Schattenbereiche extrahiert werden. Oftmals liefert die Kontur eines Highlights in Verbindung mit der Kontur eines Schattens detaillierte Informationen über das aufgefundene Objekt. Die Erfindung ermöglicht eine automatisierte Extraktion von sowohl dem Highlight als auch dem Schatten und kann somit einen Bediener entlasten und die Auswertung von Sonarbilddaten signifikant beschleunigen bzw. vollständig automatisieren.

Erfindungsgemäß ist dazu vorgesehen, dass neben den vorstehend genannten Schritten auch nach Schattenbereichen gesucht wird. Dazu wird ein weiteres initiales Konturenmuster mit einer oder mehreren initialen Konturen als aktuelles Konturenmuster mit einer oder mehreren aktuellen Konturen für als Schatten bezeichnete Bereiche mit niedrigen Intensitätswerten im Sonarbild festgelegt. Weiterhin wird eine aktuelle Level-Set-Funktion $\phi^n(x,y)$ basierend auf dem aktuellen Konturenmuster für den Schattenbereich erzeugt. Dabei wird für jedes Pixel an der Stelle x,y der kürzeste Abstand zum Konturenmuster bestimmt und der Wert dieses Abstands als Wert der Level-Set-Funktion an der Stelle x,y herangezogen, falls das entsprechende Pixel innerhalb einer aktuellen Kontur liegt. Sofern das entsprechende Pixel außerhalb der aktuellen Kontur(en) liegt, wird der negative Wert des Abstandes als Wert der Level-Set-Funktion an der Stelle x,y herangezogen. Alternativ kann die Vorzeichenbestimmung des genannten Werts der Level-Set-Funktion auch umgekehrt erfolgen.

Sodann wird eine neue Level-Set-Funktion $\phi^{n+1}(x,y)$ mittels der Gleichung

$$\phi^{n+1}(x,y) = \phi^n(x,y) + \Delta t \cdot \left( K(x,y) - f_s - d_i(x,y) + d_o(x,y) \right)$$

erzeugt. Dabei ist $\phi^n(x,y)$ die aktuelle Level-Set-Funktion, $K(x, y)$ ein die Krümmung der aktuellen Level-Set-Funktion $\phi^n(x,y)$ an der Stelle x,y repräsentierender Term, $d_i(x, y)$ ein die Differenz des Intensitätswerts des Pixels an der Stelle x,y und des Mittelswerts aller Pixel innerhalb aller aktuellen Konturen repräsentierender Term und $d_o$ ein die Differenz des Intensitätswerts des Pixels an der Stelle x,y und des Mittelwerts aller Pixel außerhalb aller aktuellen Konturen repräsentierender Term. $\Delta t$ ist eine Konstante, welche insbesondere als zeitlicher Abstand zweier Iterationsschritte angesehen werden kann.

Der Term $f_s$ wird berechnet anhand der Gleichung

$$f_s = \log\left(\frac{v_h}{v_s}\right) \cdot \exp\left(-\frac{\beta \cdot t \cdot v_s}{v_h}\right) \cdot \mu_h,$$

wobei $\mu_h$ der Mittelwert der Intensitätswerte der Pixel im Highlight ist, $v_h$ die Fläche des Highlights und $v_s$ die Fläche des Schattens ist. $t$ ist der Wert eines Iterationsschrittzählers, der bspw. die Werte 1, 2, 3... annimmt und somit den jeweiligen Iterationsschritt angibt. $\beta$ ist ein Parameter aus dem Intervall zwischen 0 und 1, der jedoch größer als 0 ist und maximal 1 beträgt.

Der Term $f_s$ ist somit eine mit jedem Iterationsschritt abnehmende Funktion, welche ihren stärksten Einfluss zu Beginn des Verfahrens, d.h. im ersten Iterationsschritt hat und dann exponentiell mit jedem Iterationsschritt abnimmt.

Anschließend wird ein neues Konturenmuster durch Schneiden der neuen Level-Set-Funktion $\phi^{n+1}(x,y)$ mit der x-y-Ebene erzeugt. Hierzu wird wiederum das neue Konturenmuster, welches auf die Schattenbereiche abzielt, mit der x-y-Ebene geschnitten, d.h. diese Level-Set-Funktion $\phi^{n+1}(x,y)=0$ gesetzt, wodurch sich das neue Konturenmuster ergibt.

Sodann wird die aktuelle Level-Set-Funktion $\phi^n(x,y)$ durch die neue Level-Set-Funktion $\phi^{n+1}(x,y)$ und das aktuelle Konturenmuster durch das neue Konturenmuster ersetzt.

Sodann werden die Schritte des Erzeugens der neuen Level-Set-Funktion $\phi^{n+1}(x,y)$, des Erzeugens eines neuen Konturenmusters durch Schneiden der neuen Level-Set-Funktion $\phi^{n+1}(x,y)$ mit der x-y-Ebene und des Ersetzens der aktuellen Level-Set-Funktion $\phi^n(x,y)$ durch die neue Level-Set-Funktion $\phi^{n+1}(x,y)$ sowie des aktuellen Konturenmusters durch das neue Konturenmuster sooft wiederholt, bis sich die Länge des Umfangs der aktuellen Konturen nicht mehr ändert oder die Änderung dieser Länge unter einem vorbestimmten Maß verbleibt.

Schließlich werden die aktuellen Konturen als Konturen eines oder mehrerer als Schatten bezeichneter Bereiche mit niedrigen Intensitätswerten im Sonarbild festgelegt.

Auf diese Weise, insbesondere dank des als Summanden verwendeten Terms $f_s$ lassen sich zuverlässig auch Schattenbereiche bzw. die Schatten zu Highlights extrahieren, da dieser Summand die Level-Set-Funktion insbesondere beim ersten Iterationsschritt, aber auch bei folgenden Iterationsschritten, anhebt (bzw. bei umgekehrter Vorzeichenbestimmung während der o.g. Abstandsbestimmung absenkt) und damit eine (endgültige) Unterdrückung von Schattenbereichen verhindert.

Gemäß einer besonderen Ausführungsform wird der die Krümmung repräsentierende Term $K(x, y)$ für das Highlight und den Schatten mittels der Gleichung

$$K(x,y) = \mathrm{div}\left(\frac{\nabla\phi(x,y)}{|\nabla\phi(x,y)|}\right)$$

berechnet, wobei V den Nabla-Operator und "div" die Divergenz bezeichnet.

Bevorzugt wird $d_i(x,y)$ mittels der Gleichung

$$d_i(x,y) = \lambda_1(u_0(x,y) - c_1)^2$$

und $d_o(x,y)$ mittels der Gleichung

$$d_o(x,y) = \lambda_2(u_0(x,y) - c_2)^2$$

berechnet. Dabei bezeichnet $u_0(x,y)$ den Intensitätswert des Pixels an der Stelle x,y, $c_1$ den Mittelwert der Intensitätswerte aller Pixel innerhalb aller Konturen und $c_2$ den Mittelwert der Intensitätswerte aller Pixel außerhalb aller Konturen.

Diese Art der Berechnung der Krümmung sowie der weiteren Terme lässt sich einfach und mit geringem Rechenaufwand durchführen. Es ist dabei zu beachten, dass die Addition einer Matrix und eines Skalars bedeutet, dass das Skalar jedem Matrixelement hinzuaddiert wird.

Gemäß einer besonderen Ausführungsform wird das Sonarbild vor Festlegung der initialen Konturenmuster für das Highlight und den Schatten einer Medianfilterung unterzogen. Dies ist vorteilhaft, da dadurch Rauschen im Sonarbild gemindert werden kann.

Bei einer weiteren besonderen Ausführungsform werden zum Festlegen der initialen Konturenmuster für die als Highlight bezeichneten Bereiche und für die als Schatten bezeichneten Bereiche anhand der Häufigkeitsverteilung der Intensitätswerte der Pixel ein oberer Schwellenwert für die initialen Konturenmuster für die als Highlight bezeichneten Bereiche und ein unterer Schwellenwert für die initialen Konturenmuster für die als Schatten bezeichneten Bereiche festgelegt. Anhand dieser Schwellenwerte werden Grobkonturen für die als Highlight bezeichneten Bereiche und Grobkonturen für die als Schatten bezeichneten Bereiche extrahiert. Dies erlaubt eine einfache und schnelle Bestimmung von Grobkonturen für die initialen Konturenmuster.

Alternativ können auch andere, insbesondere vorbestimmte Konturenmuster als Grobkonturen verwendet werden, da das Verfahren auch dann die entsprechenden Bereiche für das Highlight und den Schatten finden wird, auch wenn dies zusätzlicher Iterationsschritte bedarf.

Gemäß einer weiteren Ausführungsform werden die vorgenannten Schwellenwerte mittels k-Means-Algorithmus auf der Basis der Häufigkeitsverteilung der Pixelwerte bzw. Intensitätswerte der Pixel bestimmt. Der k-Means-Algorithmus ist ein Verfahren zur Clusteranalyse. Da die Häufigkeitsverteilung in der Regel drei Cluster aufweist, nämlich ein erstes Cluster für das Highlight, ein zweites Cluster für den Schatten und ein drittes Cluster für den Hintergrund, kann der k-Means-Algorithmus diese Cluster und damit entsprechende Clustergrenzen finden. Der k-Means-Algorithmus stellt ein schnelles Verfahren zur Schwellenwertbestimmung dar.

Gemäß einer weiteren besonderen Ausführungsform werden für die Intensitätswerte der Pixel aufgefundener Grobkonturen, und zwar für die als Highlight und/oder für die als Schatten bezeichneten Bereiche, jeweils Häufigkeitsverteilungen ermittelt und die Häufigkeitsverteilungen einem Formenvergleich unterzogen. Bei Feststellung einer Mindestabweichung der Form einer Häufigkeitsverteilung von einer Bezugsform wird eine Grobkontur als initiale Kontur verworfen. Auf diese Weise können unwahrscheinliche Grobkonturen eliminiert und somit die Anzahl benötigter Iterationsschritte reduziert werden. Hierdurch kann das Extraktionsverfahren insgesamt beschleunigt werden.

Bei einer weiteren besonderen Ausführungsform wird der Formenvergleich der Häufigkeitsverteilungen mittels Kolmogorow-Smirnow-Test (KS-Test) durchgeführt. Bei diesem Test handelt es sich um einen besonders leistungsfähigen Test zur Prüfung von Übereinstimmungen der Häufigkeitsverteilungen.

Weitere bevorzugte Ausführungsformen der Erfindung ergeben sich aus den Unteransprüchen sowie aus den anhand der Zeichnung näher erläuterten Ausführungsbeispielen. In der Zeichnung zeigen:

Fig. 1 ein Ausführungsbeispiel zur Veranschaulichung eines erfindungsgemäßen Verfahrensablaufs;

Fig. 2 die Häufigkeitsverteilung der Intensitätswerte der Pixel eines Sonarbildes mit Schattenbereichen mit niedrigen Intensitätswerten, Highlightbereichen mit hohen Intensitätswerten sowie mittleren Intensitätswerten des Bildhintergrundes;

Fig. 3a - 3d die Häufigkeitsverteilungen von vier verschiedenen Highlight-Konturen.

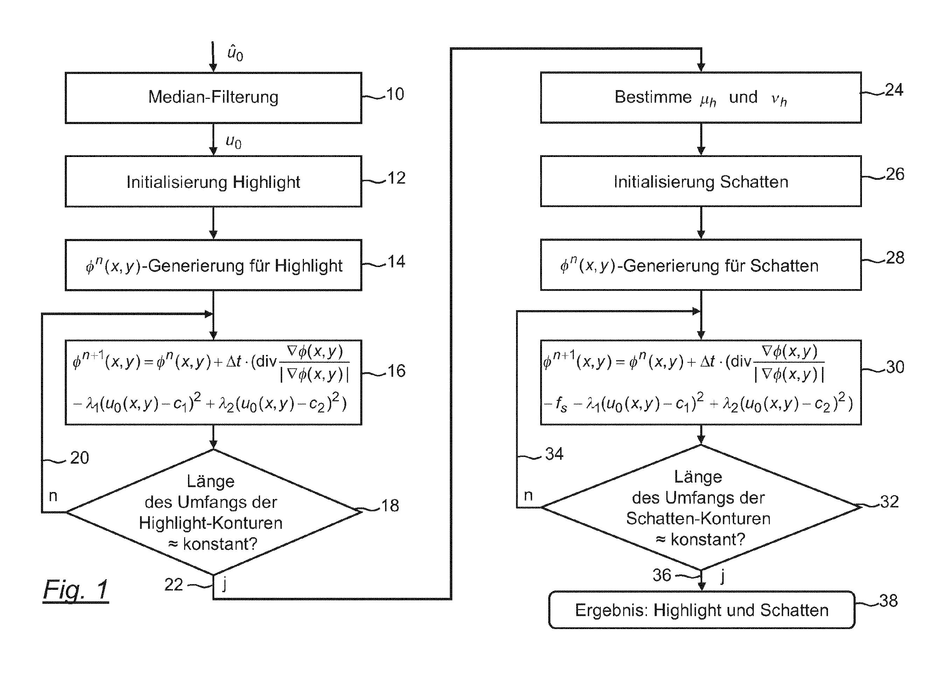

Fig. 1 zeigt ein erfindungsgemäßes Ausführungsbeispiel der Extraktion von Konturen aus einem Sonarbild. Dieses Sonarbild stammt vorzugsweise aus einer Aktiv-Sonaranlage, welche die Umgebung akustisch beschallt und die von der Umgebung rückgestreuten bzw. reflektierten Schallwellen mittels einer akustischen Antenne empfängt. Vorteilhafterweise stammt ein derartiges Bild aus einer SAS-Anlage (Synthetische-Apertur-Sonaranlage), d.h. einer Sonaranlage mit synthetischer Apertur. Die Erfindung ist aber auch bei herkömmlichen aktiven Sonaranlagen verwendbar.

Eine Sendeantenne der Sonaranlage sendet vorzugsweise einen akustischen Impuls, d.h. ein kurzes Signal, welcher von Objekten mehr oder weniger intensiv reflektiert wird. Je nach Objekt wird ein größerer oder kleinerer Teil der Sendeenergie reflektiert und ein anderer Teil absorbiert und/oder transmittiert. Der transmittierte Teil der Sendeenergie kann von - aus Sicht der Sendeantenne - hinter dem Objekt liegenden anderen Objekten zurückgestreut werden. Die Sonarbildverarbeitung ermöglicht aufgrund der Rückstreuung von Schallwellen an verschiedenen Positionen entlang eines Schallstrahls auch die Erfassung akustischer Schatten - neben der evidenten Erfassung akustisch besonders reflektierender Gegenstände, welche im Sonarbild als Bereiche mit hohen Intensitätswerten erscheinen und daher als Highlight bezeichnet werden.

Aus der Form und Größe und damit der Kontur derartiger Schatten in Verbindung mit der Kontur des einen derartigen Schattens erzeugenden Gegenstandes, d.h. der Kontur des zugehörigen Highlights, lassen sich Rückschlüsse auf die Größe und Gestalt und damit die Form des Gegenstandes schließen. Der Schatten eines Gegenstandes liefert somit zusätzliche Informationen über den Gegenstand und ist daher unter Umständen sehr hilfreich bei der Erkennung und Klassifizierung eines Gegenstandes.

Erfindungsgemäß wird daher in Sonarbildern automatisiert nach Konturen von Gegenständen bzw. Bereichen mit hohen Intensitätswerten - sog. Highlights - sowie nach Konturen von von derartigen Gegenständen erzeugten Schatten gesucht.

Gemäß Fig. 1 wird ein Sonarbild $\hat{u}_0$ zunächst einer Vorverarbeitung in Form eines Bildverarbeitungsfilters, nämlich eines Medianfilters 10 zugeführt. Die im Medianfilter 10 durchgeführte Medianfilterung bewirkt, dass die Intensitätswerte der Pixel des Bildes $\hat{u}_0$ innerhalb einer vorbestimmten Umgebung eines Pixels nach ihrer Größe sortiert werden. Der mittlere Intensitätswert der sortierten Werte wird ermittelt und der Wert im Zentrum dieser Umgebung wird durch diesen mittleren Wert ersetzt. Der mittlere Wert ist dabei nicht zu verwechseln mit dem Mittelwert. Bspw. ist der mittlere Wert der Zahlen 1, 3, 5, 8, 11, 15, 19, 20, 107 der Wert 11. Demgegenüber ist der Mittelwert dieser Zahlen 21. Ein Medianfilter ist daher recht stabil gegenüber Ausreißern im Bild. Der Medianfilter 10 neutralisiert einzelne Ausreißer, so dass das auf diese Weise vorverarbeitete Bild deutlich weniger verrauscht scheint. Bei Sonarbildern mit von Haus aus guter Qualität kann eine derartige Vorverarbeitung bei alternativen Ausführungsbeispielen entfallen.

Das auf diese Weise gefilterte Sonarbild $\hat{u}_0$ - oder auch das ungefilterte Sonarbild $\hat{u}_0$ - wird dann in einer Initialisierungsstufe 12 verwendet, um ein initiales Konturenmuster festzulegen, welches eine oder mehrere initiale Konturen für die als Highlight bezeichneten Bereiche im Sonarbild aufweist, die besonders hohe Intensitätswerte aufweisen.

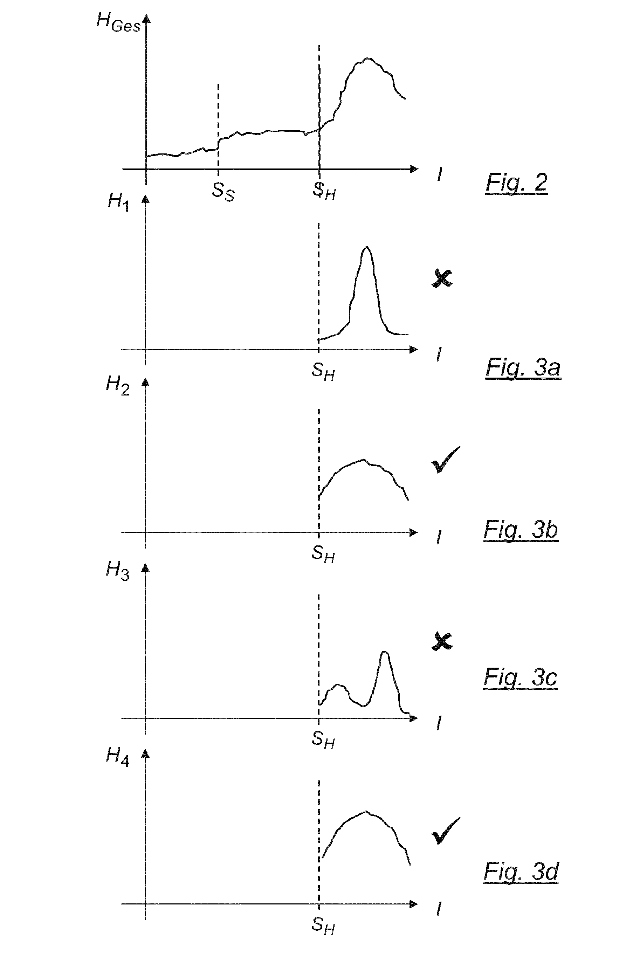

Für diese Initialisierung wird ein Schwellenwert $S_H$ verwendet, um Grobkonturen für die als Highlight bezeichneten Bereiche festzulegen. Fig. 2 veranschaulicht das Auffinden dieses Schwellenwertes $S_H$ für das Highlight sowie eines weiteren Schwellenwertes $S_S$ für als Schatten bezeichnete Bereiche im Sonarbild mit niedrigen Intensitätswerten.

In Fig. 2 ist die (normierte) Häufigkeitsverteilung $H_{Ges}$ des Sonarbildes $u_0$ dargestellt. Die Häufigkeitsverteilung

bezieht sich auf das gesamte Sonarbild $u_0$. Entlang der horizontalen Achse gemäß Fig. 2 sind die Intensitätswerte I aller Pixel aufgetragen. Über die Intensitätswerte I sind die jeweiligen Häufigkeiten $H_{Ges}$ dargestellt. Es sind deutlich verschiedene Bereiche in der Häufigkeitsverteilung zu erkennen: In einem linken Bereich befinden sich die Intensitätswerte I unterhalb einer Schwelle $S_S$. In einem rechten Bereich befinden sich die Intensitätswerte I oberhalb eines Schwellenwerts $S_H$. In einem mittleren Bereich befinden sich die Intensitätswerte I zwischen den beiden Schwellenwerte $S_S$ und $S_H$. Der mittlere Bereich ergibt sich aus den unspezifischen Intensitäten des Bildhintergrundes, während sich unterhalb der Schwelle $S_S$ eine andere Häufigkeitsverteilung ergibt ebenso wie oberhalb der Schwelle $S_H$.

Mittels des k-Means-Algorithmus auf Basis der genannten Häufigkeitsverteilung der Intensitätswerte I der Pixel können Cluster innerhalb der Häufigkeitsverteilung erkannt werden. Da die Häufigkeitsverteilung beim Vorliegen eines Highlights, eines Schattens sowie von Hintergrundbildinformationen in der Regel drei Cluster aufweisen, wird der k-Means-Algorithmus diese drei Cluster und die dazugehörigen Clustergrenzen finden. Der k-Means-Algorithmus liefert somit die Schwellenwerte $S_S$ und $S_H$.

Mittels dieser aufgefundenen Schwellenwerte werden Grobkonturen und zwar zunächst für das Highlight, aber auch für den Schatten, ermittelt und deren zugehörige Häufigkeitsverteilung gemäß den Figuren 3a bis 3d festgestellt. Die Figuren 3a bis 3d zeigen die Häufigkeitsverteilungen $H_1$, $H_2$, $H_3$, $H_4$ für vier Grobkonturen. Diese Häufigkeitsverteilungen unterscheiden sich in ihrer Form überwiegend recht deutlich voneinander. Insbesondere sind die Häufigkeitsverteilungen $H_1$, $H_3$ gemäß den Figuren 3a und 3c untypisch für ein Highlight, da sie entweder sehr eng bzw. mit zwei Maxima ausgebildet sind. Demgegenüber sind die Häufigkeitsverteilungen $H_2$, $H_4$ gemäß den Figuren 3b und 3d recht ähnlich, insbesondere ähnlich zu einer Bezugskontur. Daher wird davon ausgegangen, dass die Grobkonturen, welche zu den Figuren 3a und 3c gehören, unwahrscheinliche Konturen sind, wohingegen die Grobkonturen, welche zu den Figuren 3b und 3d gehören, wahrscheinliche Konturen sind.

Mittels des Kolmogorow-Smirnow-Tests werden die Häufigkeitsverteilungen der aufgefundenen Grobkonturen mit einer Bezugskontur verglichen und bei Feststellung einer Mindestabweichung eine Häufigkeitsverteilung einer Grobkontur von einer Bezugsform wird die entsprechende Grobkontur verworfen, d.h. nicht als initiale Kontur herangezogen. Die Grobkonturen, deren Häufigkeitsverteilungen weniger als die Mindestabweichung von der Bezugsform abweichen, d.h. der Bezugsform ähnlich sind, werden als bestätigte initiale Konturen verwendet.

In entsprechender Weise lassen sich Grobkonturen für den Schatten bestimmen und ebenfalls mittels des Kolmogorow-Smirnow-Tests verifizieren, d.h. ggf. Bestätigen oder Verwerfen. Für den Schatten werden Grobkonturen jedoch anhand des Schwellenwertes $S_S$ ausgewählt, d.h. danach, ob die entsprechenden Konturen für den Schatten Intensitätswerte unterhalb des Schwellenwertes $S_S$ aufweisen. Hierauf wird nachfolgend weiter eingegangen werden.

Die auf diese Weise festgestellten Grobkonturen, welche nicht verworfen werden, werden als initiale Konturen verwendet. D.h. in der Initialisierungsstufe 12 wird mittels k-Means-Algorithmus und Kolmogorow-Smirnow-Test ein initiales Konturenmuster mit einer oder mehreren initialen Konturen festgelegt und als aktuelles Konturenmuster mit entsprechend aktuellen Konturen für die weitere Verarbeitung verwendet.

Dieses aktuelle Konturenmuster wird sodann einer Level-Set-Funktionsstufe 14 zugeführt, welche eine aktuelle Level-Set-Funktion $\phi^n(x,y)$ auf der Grundlage dieses aktuellen Konturenmusters erzeugt. Die Level-Set-Funktion $\phi^n(x,y)$ weist dabei den gleichen Definitionsbereich in x-Richtung und in y-Richtung auf wie das zugrundeliegende Sonarbild $u_0$. Die aktuelle Level-Set-Funktion wird in der Level-Set-Funktionsstufe 14 erzeugt, indem für jedes Pixel an der Stelle x,y der euklidische Abstand zum Konturenmuster, d.h. der kürzeste Abstand zur jeweils nächsten aktuellen Kontur bestimmt wird und der Wert dieses Abstandes als Wert der Level-Set-Funktion $\phi^n(x,y)$ an der Stelle x,y herangezogen wird, falls das jeweilige Pixel innerhalb einer aktuellen Kontur liegt. Der negative Wert dieses Abstandes wird als Wert der Level-Set-Funktion an der Stelle x,y herangezogen, falls das jeweilige Pixel außerhalb der aktuellen Kontur bzw. der aktuellen Konturen liegt. Alternativ kann auch mit umgekehrten Vorzeichen gearbeitet werden.

Die auf diese Weise ermittelte Level-Set-Funktion $\phi^n(x,y)$ wird sodann der Iterationsstufe 16 zugeführt, welche schrittweise die Level-Set-Funktion verändert und dabei das Konturenmuster für das Highlight entwickelt. In der Iterationsstufe 16 wird mittels der Gleichung

$$\phi^{n+1}(x,y) = \phi^n(x,y) + \Delta t \cdot \left( \mathrm{div}\left( \frac{\nabla \phi(x,y)}{|\nabla \phi(x,y)|} \right) - \lambda_1 (u_0(x,y) - c_1)^2 + \lambda_2 (u_0(x,y) - c_2)^2 \right)$$

eine neue Level-Set-Funktion $\phi^{n+1}(x,y)$ erzeugt. Der Term $\mathrm{div}\left( \dfrac{\nabla \phi(x,y)}{|\nabla \phi(x,y)|} \right)$ repräsentiert die Krümmung der aktuellen Level-Set-Funktion $\phi^n(x,y)$ an der Stelle x,y. Der Term $\lambda_1(u_0(x,y) - c_1)^2$ repräsentiert die Differenz des Intensitätswertes des Pixels an der Stelle x,y und des Mittelwerts aller Pixel innerhalb aller aktuellen Konturen, wobei im vorliegenden Ausführungsbeispiel diese Differenz quadriert und mit einem Parameter $\lambda_1$ multipliziert wird.

In analoger Weise repräsentiert der Term $\lambda_2(u_0(x,y) - c_2)^2$ die Differenz des Intensitätswertes des Pixels an der Stelle x,y und des Mittelwerts aller Pixel außerhalb aller aktuellen Konturen und zwar wiederum in diesem Ausführungsbeispiel in Form des Quadrates dieser Differenz multipliziert mit einem Parameter $\lambda_2$. Die Parameter $\lambda_1$ und $\lambda_2$ sind feste Parameter größer als 0, d.h. $\lambda_1, \lambda_2 > 0$. Vorzugsweise werden $\lambda_1$ und $\lambda_2$ gleich 1 oder gleich 0,5 gesetzt.

$\Delta t$ ist eine Konstante.

Auf diese Weise erhält man eine neue Level-Set-Funktion $\phi^{n+1}(x,y)$. Diese Level-Set-Funktion wird sodann mit der x-y-Ebene geschnitten, so dass sich ein neues Konturenmuster ergibt. Der Schnitt der neuen Level-Set-Funktion $\phi^{n+1}(x,y)$ mit der x-y-Ebene ergibt sich auch durch Gleichsetzen dieser Level-Set-Funktion $\phi^{n+1}(x,y)$ mit 0, d.h. $\phi^{n+1}(x,y) = 0$.

Schließlich wird in der Iterationsstufe 16 die aktuelle Level-Set-Funktion $\phi^n(x,y)$ durch die neue Level-Set-Funktion $\phi^{n+1}(x,y)$ und das aktuelle Konturenmuster durch das neue Konturenmuster ersetzt. D.h. die neue Level-Set-Funktion ist nun definitionsgemäß die aktuelle Level-Set-Funktion und das neue Konturenmuster das aktuelle Konturenmuster.

In einer Längenprüfungsstufe 18 wird nunmehr geprüft, ob die Länge der aktuellen Konturen des aktuellen Konturenmuster sich gegenüber der Länge der Konturen des vorherigen Konturenmusters verändert hat bzw. wie stark eine derartige Veränderung gewesen ist. Sofern eine signifikante Änderung, d.h. eine Änderung über einem vorbestimmten Maß, welches ein absolutes oder ein relatives Maß sein kann, stattgefunden hat, verzweigt der Ablauf über den Zweig 20 zurück zur Iterationsstufe 16 und es erfolgt eine weitere Entwicklung des Konturenmusters wie vorstehend im Zusammenhang mit der Iterationsstufe 16 beschrieben.

Sofern jedoch die Länge des Umfangs der aktuellen Konturen im Wesentlichen konstant geblieben ist bzw. sich nicht mehr geändert hat bzw. die Änderung unter einem vorbestimmten Maß (relatives Maß oder absolutes Maß) geblieben ist, verzweigt die weitere Verarbeitung über den Zweig 22 zur Flächenbestimmungsstufe 24, welche die Fläche $v_h$ des Highlights und den Mittelwert $\mu_h$ der Intensitätswerte innerhalb des Highlights bestimmt. Als Highlight wird das aktuelle Konturenmuster mit den aktuellen Konturen herangezogen, wobei das Highlight die von diesen Konturen umgrenzte Fläche bezeichnet. Dieses Highlight stellt Bereiche im Sonarbild mit hohen Intensitätswerten dar.

In einer Initialisierungsstufe 26 erfolgt analog der Initialisierungsstufe 12 eine Festlegung eines weiteren initialen Konturenmusters mit einer oder mehreren initialen Konturen für den Schatten, wobei dieses initiale Konturenmuster mit seinen initialen Konturen als aktuelles Konturenmuster mit entsprechenden aktuellen Konturen festgelegt wird. Dieser Schatten bezeichnet Bereiche im Sonarbild mit niedrigen Intensitätswerten.

Die Ermittlung der Grobkonturen für den Schatten erfolgt analog der obigen Ausführungen für das Highlight zu den Figuren 2 und 3, wobei die Schwelle $S_S$ für die Ermittlung der Grobkonturen des Schattens mittels des k-Means-Algorithmus festgelegt wird. Die Häufigkeitsverteilungen der zugehörigen Grobkonturen werden sodann wiederum mittels des Kolmogorow-Smirnow-Tests verifiziert und unwahrscheinliche Grobkonturen für Schattenbereiche aussortiert. Auf die obigen Ausführungen zum Highlight wird somit verwiesen.

In der sich anschließenden Level-Set-Funktionsstufe 28 wird sodann analog der Level-Set-Funktionsstufe 14 eine aktuelle Level-Set-Funktion $\phi^n(x,y)$ für den Schatten erzeugt und zwar basierend auf dem aktuellen Konturenmuster, welches sich aus der Initialisierungsstufe 26 ergibt. Diese Level-Set-Funktion $\phi^n(x,y)$ ermittelt wiederum für jedes Pixel an der Stelle x,y den kürzesten Abstand zum Konturenmuster der Schattenkonturen. Dabei wird der Wert dieses Abstands als Wert der Level-Set-Funktion $\phi^n(x,y)$ an der Stelle x,y herangezogen, falls das jeweilige Pixel innerhalb einer aktuellen Kontur liegt. Falls das jeweilige Pixel außerhalb der aktuellen Kontur(en) liegt, wird der negative Wert des Abstands als Wert der Level-Set-Funktion herangezogen.

Die auf diese Weise erhaltene Level-Set-Funktion $\phi^n(x,y)$ für den Schatten wird sodann einer weiteren Iterationsstufe 30 für den Schatten zugeführt, welche analog der Iterationsstufe 16 für das Highlight das Konturenmuster für den Schatten entwickelt, jedoch unter Verwendung folgender Gleichung:

$$\phi^{n+1}(x,y) = \phi^n(x,y) + \Delta t \cdot \left( \text{div}\left( \frac{\nabla \phi(x,y)}{|\nabla \phi(x,y)|} \right) - f_s - \lambda_1(u_0(x,y) - c_1)^2 + \lambda_2(u_0(x,y) - c_2)^2 \right)$$

Diese Gleichung entspricht mit Ausnahme eines Terms $f_s$ der im Zusammenhang mit der Iterationsstufe 16 erläuterten Gleichung, so dass insofern auf obige Ausführungen verwiesen wird. Zusätzlich enthält diese Formel jedoch den Term $f_s$, der sich ermittelt aus

$$f_s = \log\left(\frac{\nu_h}{\nu_s}\right) \cdot \exp\left(-\frac{\beta \cdot t \cdot \nu_s}{\nu_h}\right) \cdot \mu_h.$$

In dieser Gleichung bezeichnet $\mu_h$ die in der Flächenbestimmungsstufe Block 24 bestimmte Fläche des Highlights $\nu_h$ und $\mu_h$ den Mittelwert der Intensitätswerte der Pixel im Highlight. Ferner bezeichnet $\nu_s$ die Fläche der von den aktuellen Schattenkonturen eingeschlossenen Fläche. $t$ bezeichnet den Wert eines Iterationsschrittszählers und $\beta$ einen Parameter aus dem Intervall (0, 1).

Dieser Term $f_s$ nimmt mit jedem weiteren Iterationsschritt ab und entfaltet somit seine größte Wirkung zu Beginn der Entwicklung der Konturenmuster für den Schatten. Er sorgt dafür, dass die Schattenkonturen während der Entwicklung der Konturen erhalten bleiben und schließlich ausgewählt werden.

Die auf diese Weise erhaltene neue Level-Set-Funktion $\phi^{n+1}(x,y)$ für den Schatten ersetzt sodann die aktuelle Level-Set-Funktion für den Schatten. Ebenso ersetzt das neue Konturenmuster für den Schatten das aktuelle Konturenmuster für den Schatten.

In der anschließenden Längenprüfungsstufe 32 wird sodann geprüft, ob sich die Länge des Umfangs der aktuellen Konturen gegenüber dem vorherigen Iterationsschritt signifikant verändert hat oder im Wesentlichen konstant geblieben ist bzw. die Änderung dieser Länge unter einem vorbestimmten (relativen oder absoluten) Maß verblieben ist. Sofern sich die Länge geändert hat, d.h. ein vorbestimmtes Maß überschritten hat, erfolgt eine Verzweigung über den Zweig 34 zur Iterationsstufe 30 und es werden Schritte der Iterationsstufe 30 wiederholt. Sofern jedoch die Längenänderung unter einem vorbestimmten (relativen oder absoluten) Maß verblieben ist, erfolgt eine Verzweigung über den Zweig 36 zur Ergebnisstufe 38, welche als Ergebnis nunmehr die Highlight-Kontur bzw. Highlight-Konturen sowie die Schatten-Kontur bzw. SchattenKonturen des jeweils aktuellen Konturenmusters für das Highlight bzw. den Schatten ausgibt.

Der vorstehend beschriebene Verfahrensablauf ist in einer erfindungsgemäße Vorrichtung zur Extraktion von Konturen implementiert, die für die genannten Verfahrensschritte entsprechende Datenverarbeitungsmittel aufweist, in denen das Verfahren bzw. die einzelnen Verfahrensschritte ausgeführt werden. Die Erfindung betrifft somit nicht nur das Extraktionsverfahren, sondern auch eine entsprechende Extraktionsvorrichtung.

Alle in der Figurenbeschreibung, in den Ansprüchen und in der Beschreibungseinleitung genannten Merkmale sind sowohl einzeln als auch in beliebiger Kombination miteinander einsetzbar. Die Offenbarung der Erfindung ist somit nicht auf die beschriebenen bzw. beanspruchten Merkmalskombinationen beschränkt. Vielmehr sind alle Merkmalskombinationen als offenbart zu betrachten.

**Patentansprüche**

1. Verfahren zur Extraktion von Konturen aus Sonarbildern $u_0$ mit einer Vielzahl von Pixeln mit jeweils einem Intensitätswert (I) mit den Schritten:

   a) Festlegen eines initialen Konturenmusters mit einer oder mehreren initialen Konturen als aktuelles Konturenmuster mit einer oder mehreren aktuellen Konturen für als Highlight bezeichnete Bereiche im Sonarbild mit hohen Intensitätswerten (I),
   b) Erzeugen einer aktuellen Level-Set-Funktion $\phi^n(x,y)$ basierend auf dem aktuellen Konturenmuster, wobei für jedes Pixel an der Stelle x,y der kürzeste Abstand zum Konturenmuster bestimmt wird und der Wert dieses Abstands für den Wert der Level-Set-Funktion an der Stelle x,y herangezogen wird,
   c) Erzeugen einer neuen Level-Set-Funktion $\phi^{n+1}(x,y)$ mittels der Gleichung

   $$\phi^{n+1}(x,y) = \phi^n(x,y) + \Delta t \cdot \left(K(x,y) - d_i(x,y) + d_o(x,y)\right),$$

   wobei $\phi^n(x,y)$ die aktuelle Level-Set-Funktion, $K(x,y)$ ein die Krümmung der aktuellen Level-Set-Funktion $\phi^n(x,y)$ an der Stelle x,y repräsentierender Term, $d_i(x,y)$ ein die Differenz des Intensitätswerts (I) des Pixels an der Stelle x,y und des Mittelwerts aller Pixel innerhalb aller aktuellen Konturen repräsentierender Term, $d_o(x,y)$ ein die Differenz des Intensitätswerts (I) des Pixels an der Stelle x,y und des Mittelwerts aller Pixel außerhalb aller aktuellen Konturen repräsentierender Term und $\Delta t$ eine Konstante ist,
   d) Erzeugen eines neuen Konturenmusters durch Schneiden der neuen Level-Set-Funktion $\phi^{n+1}(x,y)$ mit der x-y-Ebene,
   e) Ersetzen der aktuellen Level-Set-Funktion $\phi^n(x,y)$ durch die neue Level-Set-Funktion $\phi^{n+1}(x,y)$ und des aktuellen Konturenmusters durch das neue Konturenmuster,

f) Wiederholen der Schritte c) bis e) sooft, bis sich die Länge des Umfangs der aktuellen Kontur(en) nicht mehr ändert oder die Änderung dieser Länge unter einem vorbestimmten Maß verbleibt,

g) Festlegen der aktuellen Kontur(en) als Kontur(en) eines oder mehrerer als Highlight bezeichneter Bereiche im Sonarbild mit hohen Intensitätswerten (I), **gekennzeichnet durch** folgende weitere Schritte:

h) Festlegen eines weiteren initialen Konturenmusters mit einer oder mehreren initialen Konturen als aktuelles Konturenmuster mit einer oder mehreren aktuellen Konturen für als Schatten bezeichnete Bereiche im Sonarbild mit niedrigen Intensitätswerten (I),

i) Erzeugen einer aktuellen Level-Set-Funktion $\phi^n(x,y)$ basierend auf dem aktuellen Konturenmuster gemäß Schritt h), wobei für jedes Pixel an der Stelle x,y der kürzeste Abstand zum Konturenmuster bestimmt wird und der Wert dieses Abstands für den Wert der Level-Set-Funktion an der Stelle x,y herangezogen wird,

j) Erzeugen einer neuen Level-Set-Funktion $\phi^{n+1}(x,y)$ mittels der Gleichung

$$\phi^{n+1}(x,y) = \phi^n(x,y) + \Delta t \cdot \left( K(x,y) - f_s - d_i(x,y) + d_o(x,y) \right),$$

wobei $\phi^n(x,y)$ die aktuelle Level-Set-Funktion, $K(x,y)$ ein die Krümmung der aktuellen Level-Set-Funktion $\phi^n(x,y)$ an der Stelle x,y repräsentierender Term, $d_i(x,y)$ ein die Differenz des Intensitätswerts (I) des Pixels an der Stelle x,y und des Mittelwerts aller Pixel innerhalb aller aktuellen Konturen repräsentierender Term, $d_o(x,y)$ ein die Differenz des Intensitätswerts (I) des Pixels an der Stelle x,y und des Mittelwerts aller Pixel außerhalb aller aktuellen Konturen repräsentierender Term und $\Delta t$ eine Konstante ist, und $f_s$ berechnet wird aus

$$f_s = \log\left( \frac{v_h}{v_s} \right) \cdot \exp\left( -\frac{\beta \cdot t \cdot v_s}{v_h} \right) \cdot \mu_h,$$

wobei $\mu_h$ der Mittelwert der Intensitätswerte (I) der Pixel im Highlight, $v_h$ die Fläche des als Highlight bezeichneten Bereiches im Sonarbild mit hohen Intensitätswerten (I), $v_s$ die Fläche des als Schatten bezeichneten Bereiches im Sonarbild mit niedrigen Intensitätswerten (I), $t$ der Wert eines Iterationsschrittszählers und $\beta$ ein Parameter aus dem Intervall (0,1] ist,

k) Erzeugen eines neuen Konturenmusters **durch** Schneiden der neuen Level-Set-Funktion $\phi^{n+1}(x,y)$ mit der x-y-Ebene,

l) Ersetzen der aktuellen Level-Set-Funktion $\phi^n(x,y)$ **durch** die neue Level-Set-Funktion $\phi^{n+1}(x,y)$ und des aktuellen Konturenmusters **durch** das neue Konturenmuster,

m) Wiederholen der Schritte j) bis l) sooft, bis sich die Länge des Umfangs der aktuellen Kontur(en) nicht mehr ändert oder die Änderung dieser Länge unter einem vorbestimmten Maß verbleibt,

n) Festlegen der aktuellen Kontur(en) als Konturen eines oder mehrerer als Schatten bezeichneter Bereiche im Sonarbild mit niedrigen Intensitätswerten (I).

2. Verfahren nach Anspruch 1, **dadurch gekennzeichnet, dass** der die Krümmung repräsentierende Term $K(x,y)$ gemäß Schritt c) und/oder Schritt j) berechnet wird mittels der Gleichung

$$K(x,y) = \mathrm{div}\left( \frac{\nabla \phi(x,y)}{|\nabla \phi(x,y)|} \right),$$

wobei V den Nabla-Operator und "div" die Divergenz bezeichnet.

3. Verfahren nach Anspruch 1 oder 2, **dadurch gekennzeichnet, dass** die $d_i(x,y)$ gemäß Schritt c) und/oder Schritt j) berechnet wird mittels der Gleichung

$$d_i(x,y) = \lambda_1 (u_0(x,y) - c_1)^2$$

und $d_o(x,y)$ gemäß Schritt c) und/oder Schritt j) berechnet wird mittels der Gleichung

$$d_o(x,y) = \lambda_2(u_0(x,y) - c_2)^2,$$

wobei $u_0$ der Intensitätswert (I) des Pixels an der Stelle x,y ist, $c_1$ der Mittelwert der Intensitätswerte (I) aller Pixel innerhalb aller Konturen, $c_2$ der Mittelwert der Intensitätswerte (I) aller Pixel außerhalb aller Konturen ist und $\lambda_1$ und $\lambda_2$ feste Parameter größer als 0 sind.

4. Verfahren nach einem der vorhergehenden Ansprüche, **dadurch gekennzeichnet, dass** das Sonarbild vor Festlegung der initialen Konturenmuster gemäß Schritt a) und Schritt h) einer Medianfilterung (10) unterzogen wird.

5. Verfahren nach einem der vorhergehenden Ansprüche, **dadurch gekennzeichnet, dass** zum Festlegen der initialen Konturenmuster für die als Highlight bezeichneten Bereich gemäß Schritt a) und zum Festlegen der initialen Konturenmuster für die als Schatten bezeichneten Bereiche gemäß Schritt h) anhand der Häufigkeitsverteilung $H_{Ges}$ der Intensitätswerte (I) der Pixel ein oberer Schwellenwert $S_H$ für die initialen Konturenmuster für die als Highlight bezeichneten Bereiche und ein unterer Schwellenwert $S_S$ für die initialen Konturenmuster für die als Schatten bezeichneten Bereiche festgelegt werden und anhand dieser Schwellenwerte ($S_H, S_S$) Grobkonturen für die als Highlight bezeichneten Bereiche und Grobkonturen für die als Schatten bezeichneten Bereiche extrahiert werden.

6. Verfahren nach Anspruch 5, **dadurch gekennzeichnet, dass** die Schwellenwerte ($S_H, S_S$) mittels k-Means-Algorithmus auf der Basis der Häufigkeitsverteilung $H_{Ges}$ bestimmt werden.

7. Verfahren nach Anspruch 5 oder 6, **dadurch gekennzeichnet, dass** für die Intensitätswerte (I) der Pixel aufgefundener Grobkonturen für die als Highlight und/oder für die als Schatten bezeichneten Bereiche jeweils Häufigkeitsverteilungen ($H_1$, $H_2$, $H_3$, $H_4$) ermittelt und die Häufigkeitsverteilungen ($H_1$, $H_2$, $H_3$, $H_4$) einem Formenvergleich unterzogen und bei Feststellung einer Mindestabweichung der Form einer Häufigkeitsverteilung ($H_1$, $H_2$, $H_3$, $H_4$) von einer Bezugsform eine Grobkontur als initiale Kontur verworfen wird.

8. Verfahren nach Anspruch 7, **dadurch gekennzeichnet, dass** der Formenvergleich der Häufigkeitsverteilungen ($H_1$, $H_2$, $H_3$, $H_4$) mittels Kolmogorow-Smirnow-Test durchgeführt wird.

9. Vorrichtung zur Extraktion von Konturen aus Sonarbildern $u_0$ mit einer Vielzahl von Pixeln mit jeweils einem Intensitätswert (I) mit:

   a) Mitteln zum Festlegen eines initialen Konturenmusters mit einer oder mehreren initialen Konturen als aktuelles Konturenmuster mit einer oder mehreren aktuellen Konturen für als Highlight bezeichnete Bereiche im Sonarbild mit hohen Intensitätswerten (I),
   b) Mitteln zum Erzeugen einer aktuellen Level-Set-Funktion $\phi^n(x,y)$ basierend auf dem aktuellen Konturenmuster, wobei für jedes Pixel an der Stelle x,y der kürzeste Abstand zum Konturenmuster bestimmt wird und der Wert dieses Abstands für den Wert der Level-Set-Funktion an der Stelle x,y herangezogen wird,
   c) Mitteln zum Erzeugen einer neuen Level-Set-Funktion $\phi^{n+1}(x,y)$ mittels der Gleichung

$$\phi^{n+1}(x,y) = \phi^n(x,y) + \Delta t \cdot \left(K(x,y) - d_i(x,y) + d_o(x,y)\right),$$

   wobei $\phi^n(x,y)$ die aktuelle Level-Set-Funktion, $K(x,y)$ ein die Krümmung der aktuellen Level-Set-Funktion $\phi^n(x,y)$ an der Stelle x,y repräsentierender Term, $d_i(x,y)$ ein die Differenz des Intensitätswerts (I) des Pixels an der Stelle x,y und des Mittelwerts aller Pixel innerhalb aller aktuellen Konturen repräsentierender Term, $d_o(x,y)$ ein die Differenz des Intensitätswerts (I) des Pixels an der Stelle x,y und des Mittelwerts aller Pixel außerhalb aller aktuellen Konturen repräsentierender Term und $\Delta t$ eine Konstante ist,
   d) Mitteln zum Erzeugen eines neuen Konturenmusters durch Schneiden der neuen Level-Set-Funktion $\phi^{n+1}(x,y)$ mit der x-y-Ebene,
   e) Mitteln zum Ersetzen der aktuellen Level-Set-Funktion $\phi^n(x,y)$ durch die neue Level-Set-Funktion $\phi^{n+1}(x,y)$ und des aktuellen Konturenmusters durch das neue Konturenmuster,
   f) Mitteln zum Wiederholen der mit den Mitteln c) bis e) ausgeführten Schritte sooft, bis sich die Länge des Umfangs der aktuellen Kontur(en) nicht mehr ändert oder die Änderung dieser Länge unter einem vorbestimmten Maß verbleibt,

g) Mitteln zum Festlegen der aktuellen Kontur(en) als Kontur(en) eines oder mehrerer als Highlight bezeichneter Bereiche im Sonarbild mit hohen Intensitätswerten (I), **gekennzeichnet durch** folgende weitere Mittel:

h) Mittel zum Festlegen eines weiteren initialen Konturenmusters mit einer oder mehreren initialen Konturen als aktuelles Konturenmuster mit einer oder mehreren aktuellen Konturen für als Schatten bezeichnete Bereiche im Sonarbild mit niedrigen Intensitätswerten (I),

i) Mittel zum Erzeugen einer aktuellen Level-Set-Funktion $\phi^n(x,y)$ basierend auf dem aktuellen Konturenmuster gemäß Schritt h), wobei für jedes Pixel an der Stelle x,y der kürzeste Abstand zum Konturenmuster bestimmt wird und der Wert dieses Abstands für den Wert der Level-Set-Funktion an der Stelle x,y herangezogen wird,

j) Mittel zum Erzeugen einer neuen Level-Set-Funktion $\phi^{n+1}(x,y)$ mittels der Gleichung

$$\phi^{n+1}(x,y) = \phi^n(x,y) + \Delta t \cdot \left(K(x,y) - f_s - d_i(x,y) + d_o(x,y)\right),$$

wobei $\phi^n(x,y)$ die aktuelle Level-Set-Funktion, $K(x,y)$ ein die Krümmung der aktuellen Level-Set-Funktion $\phi^n(x,y)$ an der Stelle x,y repräsentierender Term, $d_i(x,y)$ ein die Differenz des Intensitätswerts (I) des Pixels an der Stelle x,y und des Mittelwerts aller Pixel innerhalb aller aktuellen Konturen repräsentierender Term, $d_o(x,y)$ ein die Differenz des Intensitätswerts (I) des Pixels an der Stelle x,y und des Mittelwerts aller Pixel außerhalb aller aktuellen Konturen repräsentierender Term und $\Delta t$ eine Konstante ist, und $f_s$ berechnet wird aus

$$f_s = \log\left(\frac{v_h}{v_s}\right) \cdot \exp\left(-\frac{\beta \cdot t \cdot v_s}{v_h}\right) \cdot \mu_h,$$

wobei $\mu_h$ der Mittelwert der Intensitätswerte (I) der Pixel im Highlight, $v_h$ die Fläche des Highlights, $v_s$ die Fläche des Schattens, $t$ der Wert eines Iterationsschrittszählers und $\beta$ ein Parameter aus dem Intervall (0,1] ist,

k) Mittel zum Erzeugen eines neuen Konturenmusters **durch** Schneiden der neuen Level-Set-Funktion $\phi^{n+1}(x,y)$ mit der x-y-Ebene,

l) Mittel zum Ersetzen der aktuellen Level-Set-Funktion $\phi^n(x,y)$ **durch** die neue Level-Set-Funktion $\phi^{n+1}(x,y)$ und des aktuellen Konturenmusters **durch** das neue Konturenmuster,

m) Mittel zum Wiederholen der mit den Mitteln j) bis l) ausgeführten Schritte sooft, bis sich die Länge des Umfangs der aktuellen Kontur(en) nicht mehr ändert oder die Änderung dieser Länge unter einem vorbestimmten Maß verbleibt,

n) Mittel zum Festlegen der aktuellen Kontur(en) als Konturen eines oder mehrerer als Schatten bezeichneter Bereiche im Sonarbild mit niedrigen Intensitätswerten (I).

**10.** Vorrichtung nach Anspruch 9, **gekennzeichnet durch** Mittel zum Ausführen eines Verfahrens gemäß einem oder mehrerer Ansprüche 2 bis 8.

**Claims**

**1.** Method for the extraction of contours from sonar images $u_0$ with a plurality of pixels, each with an intensity value (I), with the steps:

a) determination of an initial contour pattern with one or more initial contours as a current contour pattern with one or more current contours for regions designated as highlight in the sonar image with high intensity values (I),

b) generation of a current level-set function $\phi^n(x,y)$ based on the current contour pattern, wherein the shortest distance to the contour pattern is determined for each pixel at the point x,y and the value of this distance is used for the value of the level-set function at the point x,y,

c) generation of a new level-set function $\phi^{n+1}(x,y)$ by means of the equation

$$\phi^{n+1}(x,y) = \phi^n(x,y) + \Delta t \cdot (K(x,y) - d_i(x,y) + d_o(x,y)),$$

wherein $\phi^n(x,y)$ is the current level-set function, $K(x,y)$ is a term representing the curve of the current level-set function $\phi^n(x,y)$ at the point x,y, $d_i(x,y)$ is a term representing the difference of the intensity value (I) of the pixel at the point x,y and the mean value of all pixels within all current contours, $d_0(x,y)$ is a term representing the difference of the intensity value (I) of the pixel at the point x,y and the mean value of all pixels outside all current contours and $\Delta t$ is a constant,

d) generation of a new contour pattern by the intersection of the new level-set function $\phi^{n+1}(x,y)$ with the x-y plane,

e) replacement of the current level-set function $\phi^n(x,y)$ by the new level-set function $\phi^{n+1}(x,y)$ and of the current contour pattern by the new contour pattern,

f) repetition of the steps c) to e) until the length of the circumference of the current contour(s) no longer changes or the change in this length remains below a predetermined extent,

g) establishment of the current contour(s) as contour(s) of one or more regions designated as highlight in the sonar image with high intensity values (I), **characterised by** the following other steps:

h) establishment of another initial contour pattern with one or more initial contours as a current contour pattern with one or more current contours for regions designated as shadow in the sonar image with low intensity values (I),

i) generation of a current level-set function $\phi^n(x,y)$ based on the current contour pattern according to step h), wherein the shortest distance to the contour pattern is determined for each pixel at the point x,y and the value of this distance is used for the value of the level-set function at the point x,y,

j) generation of a new level-set function $\phi^{n+1}(x,y)$ by means of the equation

$$\phi^{n+1}(x,y) = \phi^n(x,y) + \Delta t \cdot (K(x,y) - f_s - d_i(x,y) + d_0(x,y)),$$

wherein $\phi^n(x,y)$ is the current level-set function, $K(x,y)$ is a term representing the curve of the current level-set function $\phi^n(x,y)$ at the point x,y, $d_i(x,y)$ is a term representing the difference of the intensity value (I) of the pixel at the point x,y and the mean value of all pixels within all current contours, $d_0(x,y)$ is a term representing the difference of the intensity value (I) of the pixel at the point x,y and the mean value of all pixels outside all current contours and $\Delta t$ is a constant, and $f_s$ is calculated from

$$f_s = \log\!\left(\frac{v_h}{v_s}\right) \cdot \exp\!\left(-\frac{\beta \cdot t \cdot v_s}{v_h}\right) \cdot \mu_h,$$

wherein $\mu_h$ is the mean value of the intensity values (I) of the pixels in the highlight, $v_h$ is the area of the region designated as highlight in the sonar image with high intensity values (I), $v_s$ is the area of the region designated as shadow in the sonar image with low intensity values (I), $t$ is the value of an iteration step counter and $\beta$ is a parameter from the interval (0,1],

k) generation of a new contour pattern by the intersection of the new level-set function $\phi^{n+1}(x,y)$ with the x-y plane,

l) replacement of the current level-set function $\phi^n(x,y)$ by the new level-set function $\phi^{n+1}(x,y)$ and of the current contour pattern by the new contour pattern,

m) repetition of the steps j) to l) until the length of the circumference of the current contour(s) no longer changes or the change in this length remains below a predetermined extent,

n) establishment of the current contour(s) as contours of one or more regions designated as shadow in the sonar image with low intensity values (I).

2. Method according to claim 1, **characterised by** that the term K(x,y) representing the curve according to step c) and/or step j) is calculated by means of the equation

$$K(x,y) = \operatorname{div}\!\left(\frac{\nabla \phi(x,y)}{|\nabla \phi(x,y)|}\right),$$

wherein V designates the Nabla operator and "div" the divergence.

3. Method according to claim 1 or 2, **characterised by** that the $d_i(x,y)$ according to step c) and/or step j) is calculated by means of the equation

$$d_i(x,y) = \lambda_1(u_0(x,y) - c_1)^2$$

and $d_0(x,y)$ according to step c) and/or step j) is calculated by means of the equation

$$d_0(x,y) = \lambda_2(u_0(x,y) - c_2)^2,$$

wherein $u_0$ is the intensity value (I) of the pixel at the point x,y, $c_1$ is the mean value of the intensity values (I) of all pixels within all contours, $c_2$ is the mean value of the intensity values (I) of all pixels outside all contours and $\lambda_1$ and $\lambda_2$ are fixed parameters greater than 0.

4. Method according to one of the preceding claims, **characterised by** that the sonar image is subjected to median filtering (10) before determination of the initial contour patterns according to step a) and step h).

5. Method according to one of the preceding claims, **characterised by** that to determine the initial contour patterns for the region designated as highlight according to step a) and to determine the initial contour patterns for the regions designated as shadow according to step h), an upper threshold value $S_H$ for the initial contour patterns for the regions designated as highlight and a lower threshold value $S_S$ for the initial contour patterns for the regions designated as shadow are determined with reference to the frequency distribution $H_{Ges}$ of the intensity values (I) of the pixels, and rough contours for the regions designated as highlight and rough contours for the regions designated as shadow are extracted with reference to these threshold values ($S_H$, $Ss$).

6. Method according to claim 5, **characterised by** that the threshold values ($S_H$, $Ss$) are determined by means of the k-means algorithm on the basis of the frequency distribution $H_{Ges}$.

7. Method according to claim 5 or 6, **characterised by** that for the intensity values (I) of the pixels of rough contours found for the regions designated as highlight and/or as shadow, frequency distributions ($H_1$, $H_2$, $H_3$, $H_4$) are determined respectively and the frequency distributions ($H_1$, $H_2$, $H_3$, $H_4$) are subjected to a shape comparison and, if a minimum deviation in the shape of a frequency distribution ($H_1$, $H_2$, $H_3$, $H_4$) from a reference shape is established, a rough contour is discarded as an initial contour.

8. Method according to claim 7, **characterised by** that the shape comparison of the frequency distributions ($H_1$, $H_2$, $H_3$, $H_4$) is carried out using the Kolmogorov-Smirnov test.

9. Device for the extraction of contours from sonar images $u_0$ with a plurality of pixels, each with an intensity value (I), with:

a) means for determining an initial contour pattern with one or more initial contours as a current contour pattern with one or more current contours for regions designated as highlight in the sonar image with high intensity values (I),
b) means for generating a current level-set function $\phi^n(x,y)$ based on the current contour pattern, wherein the shortest distance to the contour pattern is determined for each pixel at the point x,y and the value of this distance is used for the value of the level-set function at the point x,y,
c) means for generating a new level-set function $\phi^{n+1}(x,y)$ by means of the equation

$$\phi^{n+1}(x,y) = \phi^n(x,y) + \Delta t \cdot (K(x,y) - d_i(x,y) + d_0(x,y)),$$

wherein $\phi^n(x,y)$ is the current level-set function, $K(x,y)$ is a term representing the curve of the current level-set function $\phi^n(x,y)$ at the point x,y, $d_i(x,y)$ is a term representing the difference of the intensity value (I) of the pixel at the point x,y and the mean value of all pixels within all current contours, $d_0(x,y)$ is a term representing the difference of the intensity value (I) of the pixel at the point x,y and the mean value of all pixels outside all current

contours and $\Delta t$ is a constant,

d) means for generating a new contour pattern by the intersection of the new level-set function $\phi^{n+1}(x,y)$ with the x-y plane,

e) means for replacing the current level-set function $\phi^n(x,y)$ by the new level-set function $\phi^{n+1}(x,y)$ and the current contour pattern by the new contour pattern,

f) means for repeating the steps executed with means c) to e) until the length of the circumference of the current contour(s) no longer changes or the change in this length remains below a predetermined extent,

g) means for establishing the current contour(s) as contour(s) of one or more regions designated as highlight in the sonar image with high intensity values (I), **characterised by** the following other means:

h) means for establishing another initial contour pattern with one or more initial contours as a current contour pattern with one or more current contours for regions designated as shadow in the sonar image with low intensity values (I),

i) means for generating a current level-set function $\phi^n(x,y)$ based on the current contour pattern according to step h), wherein the shortest distance to the contour pattern is determined for each pixel at the point x,y and the value of this distance is used for the value of the level-set function at the point x,y,

j) means for generating a new level-set function $\phi^{n+1}(x,y)$ by means of the equation

$$\phi^{n+1}(x,y) = \phi^n(x,y) + \Delta t \cdot (K(x,y) - f_s - d_i(x,y) + d_0(x,y)),$$

wherein $\phi^n(x,y)$ is the current level-set function, $K(x,y)$ is a term representing the curve of the current level-set function $\phi^n(x,y)$ at the point x,y, $d_i(x,y)$ is a term representing the difference of the intensity value (I) of the pixel at the point x,y and the mean value of all pixels within all current contours, $d_0(x,y)$ is a term representing the difference of the intensity value (I) of the pixel at the point x,y and the mean value of all pixels outside all current contours and $\Delta t$ is a constant, and $f_s$ is calculated from

$$f_s = \log\left(\frac{v_h}{v_s}\right) \cdot \exp\left(-\frac{\beta \cdot t \cdot v_s}{v_h}\right) \cdot \mu_h,$$

wherein $\mu_h$ is the mean value of the intensity values (I) of the pixels in the highlight, $v_h$ is the area of the highlight, $v_s$ is the area of the shadow, $t$ is the value of an iteration step counter and $\beta$ is a parameter from the interval (0,1],

k) means for generating a new contour pattern by the intersection of the new level-set function $\phi^{n+1}(x,y)$ with the x-y plane,

l) means for replacing the current level-set function $\phi^n(x,y)$ by the new level-set function $\phi^{n+1}(x,y)$ and of the current contour pattern by the new contour pattern,

m) means for repeating the steps executed with means j) to l) until the length of the circumference of the current contour(s) no longer changes or the change in this length remains below a predetermined extent,

n) means for establishing the current contour(s) as contours of one or more regions designated as shadow in the sonar image with low intensity values (I).

**10.** Device according to claim 9, **characterised by** means for executing a method according to one or more of claims 2 to 8.

**Revendications**

**1.** Procédé d'extraction de contours à partir d'images sonar $u_0$ comportant une pluralité de pixels possédant chacun une valeur d'intensité (I), présentant les étapes consistant à :

a) établir un modèle de contour initial présentant un ou plusieurs contours initiaux en tant que modèle de contour actuel présentant un ou plusieurs contours actuels pour des zones de l'image sonar dites éclairées présentant des valeurs d'intensité élevées (I),

b) produire une fonction d'ensemble de niveaux (level set) actuelle $\phi^n(x,y)$ fondée sur le modèle de contour actuel, dans laquelle étape, pour chaque pixel au point x, y il est déterminé la plus petite distance par rapport au modèle de contour et la valeur de cette distance est utilisée pour la valeur de la fonction d'ensemble de niveaux au point x, y,

c) produire une nouvelle fonction d'ensemble de niveaux $\phi^{n+1}(x,y)$ suivant l'équation

$$\phi^{n+1}(x,y) = \phi^n(x,y) + \Delta t \cdot (K(x,y) - d_i(x,y) + d_O(x,y)),$$

dans laquelle $\phi^n(x,y)$ représente la fonction d'ensemble de niveaux actuelle, $K(x, y)$ représente un terme représentant la courbure de la fonction d'ensemble de niveaux actuelle $\phi^n(x, y)$ au point x, y, $d_i(x, y)$ représente un terme représentant la différence entre la valeur d'intensité (I) du pixel au point x, y et la moyenne de tous les pixels compris à l'intérieur de tous les contours actuels, $d_O(x, y)$ représente un terme représentant la différence entre la valeur d'intensité (I) du pixel au point x, y et la moyenne de tous les pixels compris en dehors de tous les contours actuels et $\Delta t$ représente une constante,

d) produire un nouveau modèle de contour par intersection de la nouvelle fonction d'ensemble de niveaux $\phi^{n+1}(x, y)$ avec le plan x-y,

e) remplacer la fonction d'ensemble de niveaux actuelle $\phi^n(x, y)$ par la nouvelle fonction d'ensemble de niveaux $\phi^{n+1}(x, y)$ et le modèle de contour actuel par le nouveau modèle de contour,

f) reproduire les étapes c) à e) autant que nécessaire pour que la longueur du périmètre du ou des contours actuels ne varie plus ou que la variation de cette longueur demeure en deçà d'une mesure prédéterminée,

g) établir le ou les contours actuels en tant que contour(s) d'une ou plusieurs zones de l'image sonar dites éclairées présentant des valeurs d'intensité élevées (I), **caractérisé par** les étapes supplémentaires suivantes consistant à :

h) établir un autre modèle de contour initial présentant un ou plusieurs contours initiaux en tant que modèle de contour actuel présentant un ou plusieurs contours actuels pour des zones de l'image sonar dites d'ombre présentant des valeurs d'intensité faibles (I),

i) produire une fonction d'ensemble de niveaux actuelle $\phi^n(x, y)$ fondée sur le modèle de contour actuel selon l'étape h), dans laquelle étape, pour chaque pixel au point x, y il est déterminé la plus petite distance par rapport au modèle de contour et la valeur de cette distance est utilisée pour la valeur de la fonction d'ensemble de niveaux au point x, y,

j) produire une nouvelle fonction d'ensemble de niveaux $\phi^{n+1}(x, y)$ suivant l'équation

$$\phi^{n+1}(x,y) = \phi^n(x,y) + \Delta t \cdot (K(x,y) - f_s - d_i(x,y) + d_O(x,y)),$$

dans laquelle $\phi^n(x, y)$ représente la fonction d'ensemble de niveaux actuelle, $K(x, y)$ représente un terme représentant la courbure de la fonction d'ensemble de niveaux actuelle $\phi^n(x, y)$ au point x, y, $d_i(x, y)$ représente un terme représentant la différence entre la valeur d'intensité (I) du pixel au point x, y et la moyenne de tous les pixels compris à l'intérieur de tous les contours actuels, $d_O(x, y)$ représente un terme représentant la différence entre la valeur d'intensité (I) du pixel au point x, y et la moyenne de tous les pixels compris en dehors de tous les contours actuels et $\Delta t$ représente une constante, et $f_s$ est calculé à partir de

$$f_s = log\left(\frac{v_h}{v_s}\right) \cdot exp\left(-\frac{\beta \cdot t \cdot v_s}{v_h}\right) \cdot \mu_h,$$

où $\mu_h$ représente la moyenne des valeurs d'intensité (I) des pixels dans la zone éclairée, $v_h$ représente la superficie de la zone de l'image sonar dite éclairée présentant des valeurs d'intensité élevées (I), $v_s$ représente la superficie de la zone de l'image sonar dite d'ombre présentant des valeurs d'intensité faibles (I), $t$ représente la valeur d'un compteur d'étapes d'itération et $\beta$ représente un paramètre compris dans l'intervalle (0, 1],

k) produire un nouveau modèle de contour par intersection de la nouvelle fonction d'ensemble de niveaux $\phi^{n+1}(x, y)$ avec le plan x-y,

l) remplacer la fonction d'ensemble de niveaux actuelle $\phi^n(x, y)$ par la nouvelle fonction d'ensemble de niveaux $\phi^{n+1}(x, y)$ et le modèle de contour actuel par le nouveau modèle de contour,

m) reproduire les étapes j) à l) autant que nécessaire pour que la longueur du périmètre du ou des contours actuels ne varie plus ou que la variation de cette longueur demeure en deçà d'une mesure prédéterminée,

n) établir le ou les contours actuels en tant que contours d'une ou plusieurs zones de l'image sonar dites d'ombre présentant des valeurs d'intensité faibles (I).

**2.** Procédé selon la revendication 1, **caractérisé en ce que** le terme représentant la courbure $K(x, y)$ selon l'étape c) et/ou l'étape j) est calculé suivant l'équation

$$K(x, y) = div\left(\frac{\nabla\phi(x, y)}{|\nabla\phi(x, y)|}\right),$$

dans laquelle V représente l'opérateur Nabla et « div » représente la divergence.

**3.** Procédé selon la revendication 1 ou 2, **caractérisé en ce que** $d_i(x, y)$ selon l'étape c) et/ou l'étape j) est calculé suivant l'équation

$$d_i(x, y) = \lambda_1\left(u_0(x, y) - c_1\right)^2,$$

et $d_o(x, y)$ selon l'étape c) et/ou l'étape j) est calculé suivant l'équation

$$d_o(x, y) = \lambda_2\left(u_0(x, y) - c_2\right)^2,$$

dans lesquelles $u_0$ représente la valeur d'intensité (I) du pixel au point x, y, $c_1$ représente la moyenne des valeurs d'intensité (I) de tous les pixels compris à l'intérieur de tous les contours, $c_2$ représente la moyenne des valeurs d'intensité (I) de tous les pixels compris en dehors de tous les contours et $\lambda_1$ et $\lambda_2$ représentent des paramètres fixes supérieurs à 0.

**4.** Procédé selon l'une quelconque des revendications précédentes, **caractérisé en ce que** l'image sonar est soumise à un filtrage médian (10) avant l'établissement du modèle de contour initial selon l'étape a) et l'étape h).

**5.** Procédé selon l'une quelconque des revendications précédentes, **caractérisé en ce que,** pour établir le modèle de contour initial pour les zones dites éclairées selon l'étape a) et pour établir le modèle de contour initial pour les zones dites d'ombre selon l'étape h), une valeur seuil supérieure $S_H$ pour les modèles de contour initiaux pour les zones dites éclairées et une valeur seuil inférieure $S_S$ pour les modèles de contour initiaux pour les zones dites d'ombre sont établies à l'aide de la distribution de fréquence $H_{Ges}$ des valeurs d'intensité (I) des pixels et des contours grossiers pour les zones dites éclairées et des contours grossiers pour les zones dites d'ombre sont extraits à l'aide de ces valeurs seuils ($S_H$, $S_S$).

**6.** Procédé selon la revendication 5, **caractérisé en ce que** les valeurs seuils ($S_H$, $S_S$) sont déterminées au moyen de l'algorithme k-moyenne sur la base de la distribution de fréquence $H_{Ges}$.

**7.** Procédé selon la revendication 5 ou 6, **caractérisé en ce que,** pour les valeurs d'intensité (I) des pixels des contours grossiers trouvés pour les zones dites éclairées et/ou pour les zones dites d'ombre, des distributions de fréquence ($H_1$, $H_2$, $H_3$, $H_4$) respectives sont déterminées et ces distributions de fréquence ($H_1$, $H_2$, $H_3$, $H_4$) sont soumises à une comparaison de formes et, en cas de constatation d'un écart minimum de la forme d'une distribution de fréquence ($H_1$, $H_2$, $H_3$, $H_4$) par rapport à une forme de référence, un contour grossier n'est pas accepté en tant que contour initial.

**8.** Procédé selon la revendication 7, **caractérisé en ce que** la comparaison de formes des distributions de fréquence ($H_1$, $H_2$, $H_3$, $H_4$) s'effectue selon un test de Kolmogorov-Smirnov.

**9.** Dispositif d'extraction de contours à partir d'images sonar $u_0$ comportant une pluralité de pixels possédant chacun une valeur d'intensité (I), comportant :

a) des moyens permettant d'établir un modèle de contour initial présentant un ou plusieurs contours initiaux en tant que modèle de contour actuel présentant un ou plusieurs contours actuels pour des zones de l'image sonar dites éclairées présentant des valeurs d'intensité élevées (I),

b) des moyens permettant de produire une fonction d'ensemble de niveaux actuelle $\phi^n(x, y)$ fondée sur le modèle de contour actuel, grâce auxquels, pour chaque pixel au point x, y il est déterminé la plus petite distance par rapport au modèle de contour et la valeur de cette distance est utilisée pour la valeur de la fonction d'ensemble de niveaux au point x, y,

c) des moyens permettant de produire une nouvelle fonction d'ensemble de niveaux $\phi^{n+1}(x, y)$ suivant l'équation

$$\phi^{n+1}(x, y) = \phi^n(x, y) + \Delta t \cdot \left( K(x, y) - d_i(x, y) + d_O(x, y) \right),$$

dans laquelle $\phi^n(x, y)$ représente la fonction d'ensemble de niveaux actuelle, $K(x, y)$ représente un terme représentant la courbure de la fonction d'ensemble de niveaux actuelle $\phi^n(x, y)$ au point x, y, $d_i(x, y)$ représente un terme représentant la différence entre la valeur d'intensité (I) du pixel au point x, y et la moyenne de tous les pixels compris à l'intérieur de tous les contours actuels, $d_o(x, y)$ représente un terme représentant la différence entre la valeur d'intensité (I) du pixel au point x, y et la moyenne de tous les pixels compris en dehors de tous les contours actuels et $\Delta t$ représente une constante,

d) des moyens permettant de produire un nouveau modèle de contour par intersection de la nouvelle fonction d'ensemble de niveaux $\phi^{n+1}(x, y)$ avec le plan x-y,

e) des moyens permettant de remplacer la fonction d'ensemble de niveaux actuelle $\phi^n(x, y)$ par la nouvelle fonction d'ensemble de niveaux $\phi^{n+1}(x, y)$ et le modèle de contour actuel par le nouveau modèle de contour,

f) des moyens permettant de réitérer les étapes mettant en oeuvre les moyens c) à e) autant que nécessaire pour que la longueur du périmètre du ou des contours actuels ne varie plus ou que la variation de cette longueur demeure en deçà d'une mesure prédéterminée,

g) des moyens permettant d'établir le ou les contours actuels en tant que contour(s) d'une ou plusieurs zones de l'image sonar dites éclairées présentant des valeurs d'intensité élevées (I), **caractérisé par** les moyens supplémentaires suivants :

h) des moyens permettant d'établir un autre modèle de contour initial présentant un ou plusieurs contours initiaux en tant que modèle de contour actuel présentant un ou plusieurs contours actuels pour des zones de l'image sonar dites d'ombre présentant des valeurs d'intensité faibles (I),

i) des moyens permettant de produire une fonction d'ensemble de niveaux actuelle $\phi^n(x, y)$ fondée sur le modèle de contour actuel selon l'étape h), grâce auxquels, pour chaque pixel au point x, y il est déterminé la plus petite distance par rapport au modèle de contour et la valeur de cette distance est utilisée pour la valeur de la fonction d'ensemble de niveaux au point x, y,

j) des moyens permettant de produire une nouvelle fonction d'ensemble de niveaux $\phi^{n+1}(x, y)$ suivant l'équation

$$\phi^{n+1}(x, y) = \phi^n(x, y) + \Delta t \cdot \left( K(x, y) - f_s - d_i(x, y) + d_O(x, y) \right),$$

dans laquelle $\phi^n(x, y)$ représente la fonction d'ensemble de niveaux actuelle, $K(x, y)$ représente un terme représentant la courbure de la fonction d'ensemble de niveaux actuelle $\phi^n(x, y)$ au point x, y, $d_i(x, y)$ représente un terme représentant la différence entre la valeur d'intensité (I) du pixel au point x, y et la moyenne de tous les pixels compris à l'intérieur de tous les contours actuels, $d_o(x, y)$ représente un terme représentant la différence entre la valeur d'intensité (I) du pixel au point x, y et la moyenne de tous les pixels compris en dehors de tous les contours actuels et $\Delta t$ représente une constante, et $f_s$ est calculé à partir de

$$f_s = log\left( \frac{v_h}{v_s} \right) \cdot exp\left( -\frac{\beta \cdot t \cdot v_s}{v_h} \right) \cdot \mu_h,$$

où $\mu_h$ représente la moyenne des valeurs d'intensité (I) des pixels dans la zone éclairée, $v_h$ représente la superficie de la zone éclairée, $v_s$ représente la superficie de la zone d'ombre, t représente la valeur d'un compteur d'étapes d'itération et $\beta$ représente un paramètre compris dans l'intervalle (0, 1],

k) des moyens permettant de produire un nouveau modèle de contour par intersection de la nouvelle fonction d'ensemble de niveaux $\phi^{n+1}(x, y)$ avec le plan x-y,

l) des moyens permettant de remplacer la fonction d'ensemble de niveaux actuelle $\phi^n(x, y)$ par la nouvelle fonction d'ensemble de niveaux $\phi^{n+1}(x, y)$ et le modèle de contour actuel par le nouveau modèle de contour,

m) des moyens permettant de réitérer les étapes mettant en oeuvre les moyens j) à l) autant que nécessaire pour que la longueur du périmètre du ou des contours actuels ne varie plus ou que la variation de cette longueur demeure en deçà d'une mesure prédéterminée,

n) des moyens permettant d'établir le ou les contours actuels en tant que contours d'une ou plusieurs zones de l'image sonar dites d'ombre présentant des valeurs d'intensité faibles (I).

**10.** Dispositif selon la revendication 9, **caractérisé par** des moyens permettant de mettre en oeuvre un procédé selon une ou plusieurs des revendications 2 à 8.

$\hat{u}_0$

| Median-Filterung | $\sim$10 |

$u_0$

| Initialisierung Highlight | $\sim$12 |

| $\phi^n(x,y)$-Generierung für Highlight | $\sim$14 |

$$\phi^{n+1}(x,y) = \phi^n(x,y) + \Delta t \cdot (\text{div}\frac{\nabla\phi(x,y)}{|\nabla\phi(x,y)|}$$
$$-\lambda_1(u_0(x,y)-c_1)^2 + \lambda_2(u_0(x,y)-c_2)^2)$$

$\sim$16

$\sim$20

Länge des Umfangs der Highlight-Konturen ≈ konstant?  $\sim$18

n

22$\sim$ j

*Fig. 1*

| Bestimme $\mu_h$ und $\nu_h$ | $\sim$24 |

| Initialisierung Schatten | $\sim$26 |

| $\phi^n(x,y)$-Generierung für Schatten | $\sim$28 |

$$\phi^{n+1}(x,y) = \phi^n(x,y) + \Delta t \cdot (\text{div}\frac{\nabla\phi(x,y)}{|\nabla\phi(x,y)|}$$
$$-f_s - \lambda_1(u_0(x,y)-c_1)^2 + \lambda_2(u_0(x,y)-c_2)^2)$$

$\sim$30

$\sim$34

Länge des Umfangs der Schatten-Konturen ≈ konstant?  $\sim$32

n

36$\sim$ j

| Ergebnis: Highlight und Schatten | $\sim$38 |

$H_{Ges}$

$S_S$    $S_H$    $l$

_Fig. 2_

$H_1$

✖

$S_H$    $l$

_Fig. 3a_

$H_2$

✔

$S_H$    $l$

_Fig. 3b_

$H_3$

✖

_Fig. 3c_

$S_H$    $l$

$H_4$

✔

_Fig. 3d_

$S_H$    $l$

## IN DER BESCHREIBUNG AUFGEFÜHRTE DOKUMENTE

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

**In der Beschreibung aufgeführte Nicht-Patentliteratur**

- **CHAN, TONY, F. ; VESE, LUMINITA A.** Active Contours Without Edges. *IEEE Transactions on Image Processing,* 2001, vol. 10, 266-277
- **X. YE ; L. WANG ; T. WANG ; G. WANG.** A Level-set Model Driven by Bidimensional EMD for Sonar Image Segmentation. *Proceedings of the 201 1 IEEE ICMA,* August 2011

- Sonar image segmentation based on GMRF and level-set models. **YE X F et al.** OCEAN ENGINEERING. PERGAMON, 01. Juli 2010, vol. 37, 891-901